Europäisches Patentamt

European Patent Office

Office européen des brevets

(11) Numéro de publication: **0 430 733 A1**

# DEMANDE DE BREVET EUROPEEN

(21) Numéro de dépôt: 90403109.3

(22) Date de dépôt: 02.11.90

(51) Int. Cl.⁵: **C21D 9/00, F27B 9/22, F27D 3/00, B65G 47/252**

(30) Priorité: 24.11.89 FR 8915512

(43) Date de publication de la demande:
05.06.91 Bulletin 91/23

(84) Etats contractants désignés:
**AT BE CH DE DK ES GB GR IT LI LU NL SE Bulletin 1**

(71) Demandeur: **STEIN HEURTEY, Société Anonyme:**
**Z.A.I. du bois de l'Epine**
**F-91130 Ris Orangis(FR)**

(72) Inventeur: **Thoor, Henry-Albert**
**Hameau du Petit Vau**
**F-89500 Villeneuve Sur Yonne(FR)**
Inventeur: **Rostan, Michel**
**61, Allée du Forgeron**
**F-78310 Coignieres(FR)**

(74) Mandataire: **Armengaud, Alain**
**Cabinet ARMENGAUD AINE 3, Avenue Bugeaud**
**F-75116 Paris(FR)**

(54) **Dispositif de retournement de produits sidérurgiques de section carrée ou rectangulaire sur un angle de 180 degrés.**

(57) Dispositif pour assurer un retournement de produits sidérurgiques ou métallurgiques de section carrée ou rectangulaire selon un angle de 180°, notamment tels que des blooms ou des billettes, en particulier lors d'un transfert de tels produits entre deux fours de traitement thermique, caractérisé en ce qu'il comprend : une plaque inclinée (12) le long de laquelle le produit (10) à retourner est amené à glisser sous l'effet de sa propre inertie et sans tourner sur lui-même et des moyens de réception et de retournement (14, 20) positionnés au bas de ladite plaque inclinée, afin de recevoir les produits (10) délivrés par cette plaque inclinée et leur faire subir une rotation de l'ordre de 180° autour de leur axe et pour les délivrer ensuite à un moyen de transfert et d'évacuation (32).

FIG. 1

EP 0 430 733 A1

## DISPOSITIF DE RETOURNEMENT DE PRODUITS SIDERURGIQUES DE SECTION CARREE OURECTANGULAIRE SUR UN ANGLE DE 180°

La présente invention est relative à un dispositif conçu de façon à retourner de 180° des produits métallurgiques ou sidérurgiques de section carrée ou rectangulaire tels que, notamment des blooms ou des billettes.

On sait que, lors du traitement thermique de certains produits métallurgiques ou sidérurgiques, il est nécessaire de leur faire subir une rotation de 180° entre les étapes de traitement thermique. Ainsi dans certaines applications, les produits sont préchauffés dans un premier four poussant de préchauffage jusqu'à une température de l'ordre de 800° C et ils sont ensuite dirigés vers un second four poussant de réchauffage où ils sont portés à une température voisine de leur point de transformation. Cette température du second four poussant peut être de l'ordre de 1200° C. Afin d'obtenir une meilleure homogénéisation de la température entre les faces inférieure et supérieure des produits, il est recommandé de retourner ces derniers de 180° autour de leur axe, cette opération de retournement étant effectuée entre la sortie du premier four poussant de préchauffage et l'entrée dans le second four poussant de réchauffage.

La présente invention se propose d'apporter un dispositif répondant à cette préoccupation.

En conséquence, l'invention a pour objet un dispositif de retournement de produits sidérurgiques de section carrée ou rectangulaire selon un angle de 180°, notamment lors d'un transfert de tels produits entre deux fours de traitement thermique, caractérisé en ce qu'il comprend : une plaque inclinée le long de laquelle le produit à retourner est amené à glisser sous l'effet de sa propre inertie et sans tourner sur lui-même et des moyens de réception et de retournement qui sont positionnés au bas de ladite plaque inclinée de manière a recevoir les produits délivrés par cette plaque inclinée et à leur faire subir une rotation de l'ordre de 1800 autour de leur axe et pour les délivrer ensuite à un moyen de transfert et d'évacuation, lesdits moyens de réception et de retournement comprennent : des premiers moyens de retournement positionnés au bas de ladite plaque inclinée, afin de recevoir successivement chacun des produits délivrés par cette plaque inclinée et lui faire subir une première rotation d'environ 90° autour de son axe et des seconds moyens de retournement, recevant successivement chacun des produits ayant subi ladite première rotation de 90° pour le faire tourner d'un angle de l'ordre de 90° assurant ainsi le retournement du produit sur 180°.

Selon un exemple de réalisation préféré de ce mode d'exécution du dispositif selon l'invention, les premiers moyens de retournement sont montés fou, c'est-à-dire sans système moteur de commande et ils fonctionnent sans apport d'énergie extérieure, le retournement sur 90° de chaque produit s'effectuant uniquement par l'inertie de ce produit et par basculement de son centre de gravité autour de l'une de ses arêtes. Dans ce mode de réalisation, les premiers moyens de retournement sont réalisés sous la forme d'une pièce cruciforme montée libre à pivotement sur un axe perpendiculaire à l'axe du déplacement des produits le long de ladite plaque inclinée, cette pièce cruciforme étant positionnée de façon que ses branches viennent se placer successivement dans le prolongement de la surface de ladite plaque inclinée, afin de recevoir le produit ayant glissé au bas de ladite plaque, la pièce cruciforme basculant alors autour de son axe sous l'effet de l'inertie du produit qu'elle reçoit, pour tourner le produit selon un angle.

Selon l'invention, les seconds moyens de retournement des produits peuvent être réalisés sous la forme d'un support mobile en forme d'équerre dont l'une des branches peut être amenée dans le prolongement de la surface de la plaque inclinée afin de recevoir le produit ayant subi une première rotation de 90° sous l'effet des premiers moyens de retournement, ce support étant articulé sur un axe perpendiculaire à l'axe de déplacement du produit et, étant entraîné en rotation autour de cet axe par l'intermédiaire, par exemple, d'un système de commande pouvant être réalisé sous la forme d'un ou plusieurs vérins pneumatiques ou hydrauliques.

Selon une variante du dispositif selon cette invention, on peut prévoir un plan incliné, de longueur déterminée, entre les premiers et les seconds moyens de retournement. Il est également possible de concevoir les seconds moyens de retournement de manière qu'ils puissent fonctionner sans moyen de commande c'est-à-dire sans apport d'énergie extérieure. Dans cette variante, les seconds moyens de retournement sont montés fou, autour de leur axe de rotation, de la même manière que les premiers moyens de retournement, la seconde rotation de 90° du produit arrivant dans les seconds moyens de retournement s'effectuant alors sous l'effet de l'inertie de ce dernier, par basculement de son centre de gravité autour d'une arête.

D'autres caractéristiques et avantages de la présente invention ressortiront de la description faite ci-après en référence aux dessins annexés qui en illustrent deux exemples de réalisation dépourvus de tout caractère limitatif. Sur les dessins :

- la figure 1 est une vue en élévation latérale d'un premier exemple de réalisation de ce dispositif et ;
- la figure 2 est également une vue en élévation latérale illustrant un second exemple de réalisation du dispositif objet de l'invention.

Ainsi qu'on l'a précisé ci-dessus, le dispositif objet de la présente invention est destiné plus particulièrement au retournement de blooms ou de billettes de faible dimension (par exemple de longueur de l'ordre de 6 m) et il est situé à la sortie d'un four poussant de préchauffage avant l'entrée dans un deuxième four poussant de réchauffage, les produits subissant la rotation de 180° entre ces deux fours poussants.

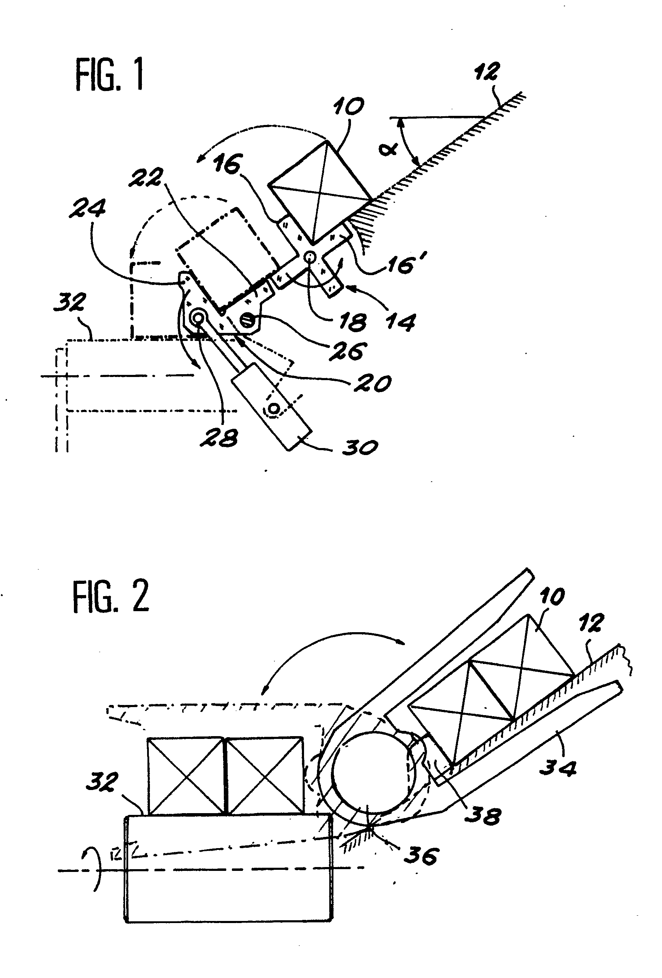

En se référant à la figure 1, on voit que selon un premier mode de réalisation du dispositif objet de la présente invention comporte essentiellement les parties constitutives suivantes :
- une plaque de chute 12 inclinée selon un angle qui est suffisamment important pour que le produit 10, délivré à la partie supérieure de cette plaque (et qui provient du premier four poussant de préchauffage, non représenté sur la figure 1) glisse par lui-même et sans tourner sur la surface de cette plaque ;
- des premiers moyens de retournement désignés dans leur ensemble par la référence 14 qui sont conçus de façon à faire subir une rotation de l'ordre de 90° au produit qui arrive au bas de la surface de la plaque inclinée 12 et ;
- des seconds moyens de retournement désignés dans leur ensemble par la référence 20, qui reçoivent les produits délivrés par les premiers moyens 14, après rotation de 90° et qui leur font subir une rotation complémentaire pour obtenir finalement un retournement complet de 180°, les produits ainsi retournés étant enfin délivrés à un moyen de transfert schématisé en 32 qui, dans cet exemple d'application les délivre au second four poussant de réchauffage (non représenté sur le dessin).

Dans l'exemple de réalisation de l'invention représenté sur la figure 1, les premiers moyens de retournement 14 fonctionnent sans apport d'énergie extérieure, c'est-à-dire sans moyens de commande. Comme on le voit sur la figure, ces premiers moyens de retournement 14 sont réalisés sous la forme d'une pièce cruciforme 14 pouvant tourner autour d'un axe de rotation 18 qui est perpendiculaire à l'axe de déplacement des produits 10 le long de la surface de la plaque de chute inclinée 12. Grâce à cette disposition, chaque branche telle que 16, 16' de cette pièce cruciforme 14 vient successivement se positionner dans le prolongement de la surface de la plaque inclinée 12 de manière à recevoir le produit 10 qui arrive en glissant au bas de la plaque 12. Sur la figure, on a représenté le produit 10 entre les branches 16, 16' de la pièce cruciforme 14. Sous l'effet de l'inertie de ce produit 10, la pièce cruciforme 14 bascule autour de son axe 18 faisant ainsi subir au produit 10 une première rotation d'environ 90°.

Dans cet exemple de réalisation les seconds moyens de retournement 20 sont réalisés sous la forme d'un support en forme d'équerre dont l'une des branches 22 peut être amenée dans le prolongement de l'une des branches de la pièce cruciforme 14 de manière à recevoir le produit tel que 10 ayant subi une première rotation de 900 par basculement de la pièce 14. L'autre branche 24 du support en forme d'équerre 20 sert de butée au produit lorsqu'il est délivré par la pièce 14 et qu'il arrive sur ce support 20. Ce support en forme d'équerre 20 peut être entraîné en rotation autour d'un axe 26 perpendiculaire à l'axe de déplacement des produits sur le dispositif. Dans cet exemple de réalisation, la commande du déplacement en rotation du support mobile en forme d'équerre 20 est réalisée à l'aide d'un ou de plusieurs vérins pneumatiques ou hydrauliques 30 dont les cylindres respectifs sont montés sur le bâti du dispositif et dont les tiges de piston respectives sont articulées en 28 sur le support 20.

Le fonctionnement de ce dispositif est le suivant :
- les produits tels que 10, qui dans cet exemple de réalisation sortent du premier four poussant de préchauffage, sont amenés en haut de la plaque inclinée 12, le long de laquelle ils glissent sans tourner sur eux-mêmes ;
- au bas de cette plaque 12, le produit vient se loger entre deux branches telles que 16, 16' de la pièce cruciforme 14 constituent les premiers moyens de retournement et, sous l'effet de l'inertie du produit 10 cette pièce bascule autour de son axe 18 en tournant selon un angle d'environ 90° afin d'être délivré aux seconds moyens de retournement 20 ;
- le produit vient donc alors se positionner entre les branches 22 et 24 du support mobile en forme d'équerre 20 et, la commande du ou des vérins tels que 30 provoque le basculement du support mobile 20 autour de son axe d'articulation 26 complétant ainsi la rotation à 180° de ce produit, ce dernier étant alors délivré au moyen de transfert 32 qui assure son enfournement dans le second fourpoussant de réchauffage.

Selon une variante de ce premier mode de réalisation de l'invention, on peut prévoir un plan incliné entre les premiers moyens de retournement 14 et les seconds moyens de retournement 20. Ces seconds moyens de retournement 20 peuvent être du même type que les premiers moyens de retournement 14 décrits ci-dessus, c'est-à-dire qu'ils peuvent être montés fou autour de leur axe de basculement, fonctionnant ainsi sans apport d'énergie extérieure, le retournement s'effectuant alors sous l'effet de l'inertie du produit, par basculement de son centre de gravité autour de l'une des arêtes lorsqu'il arrive sur le support mobile 20. La nécessité de l'installation d'un système de commande des seconds moyens de retournement est essentiellement fonction de la place disponible et de l'énergie qui peut être récupérée sur le produit après sa première rotation sur les premiers moyens 14. En effet, lorsque le produit, après avoir subi sa première rotation de 90° grâce aux premiers moyens 14, est redéposé sur un plan incliné de longueur et/ou de pente suffisamment importante pour qu'il ait récupéré une certaine énergie, on peut alors adopter la variante fonctionnant sans apport d'énergie extérieure.

On se réfère maintenant à la figure 2 qui illustre un second mode de réalisation du dispositif objet de cette invention.

Dans ce mode d'exécution, les produits 10 devant être retournés sont amenés en glissant le long de la plaque de chute inclinée 12 sur un moyen de réception et de retournement désigné par la référence 34 qui en une seule opération de rotation effectue leur retournement selon un angle de l'ordre de 180° comme représenté sur cette figure 2.

Ainsi qu'on le voit sur cette figure le moyen de réception et sde retournement 34 est constitué par deux ou plusieurs systèmes de réception en forme de U incliné parallèlement à la plaque de chute 12 et pouvant pivoter autour de l'axe 36 qui est perpendiculaire à l'axe longitudinal de la plaque 12. Le mouvement de pivotement des systèmes de réception tels que 34 peut être obtenu par l'intermédiaire d'un levier qui est relié à un vérin pneumatique ou hydraulique (un tel système de conception classique n'a pas été représenté sur la figure 2). On prévoit des butées fixes telles que 38 qui sont positionnées de manière à absorber les chocs lors de la réception des produits tels que 10, et le système de commande de la rotation des moyens de réception et de retournement 34 est conçu de manière à effectuer un échappement des butées pour permettre le retournement des produits 10 selon un angle de l'ordre de 180° sous l'effet de la rotation des systèmes 34. A l'issue de cette rotation les produits sont réceptionnés sur un organe d'évacuation et de transfert tel que la table à rouleaux 32.

Il demeure bien entendu que la présente invention n'est pas limitée aux exemples de réalisation décrits et/ou représentés ici. Elle n'est pas non plus limitée à l'exemple d'appplication mentionné dans la présente description. L'invention peut, en effet, être utilisée dans toutes les installations de traitement métallurgique ou sidérurgique dans lesquelles les produits doivent subir une rotation de 180° entre les différentes étapes de traitement.

## Revendications

1 - Dispositif pour assurer un retournement de produits sidérurgiques ou métallurgiques de section carrée ou rectangulaire selon un angle de 180°, notamment tels que des blooms ou des billettes, en particulier lors d'un transfert de tels produits entre deux fours de traitement thermique, caractérisé en ce qu'il comprend : une plaque inclinée (12) le long de laquelle le produit (10) à retourner est amené à glisser sous l'effet de sa propre inertie et sans tourner sur lui-même et des moyens de réception et de retournement (14, 20; 34) positionnés au bas de ladite plaque inclinée, afin de recevoir les produits (10) délivrés par cette plaque inclinée et leur faire subir une rotation de l'ordre de 180° autour de leur axe et pour les délivrer ensuite à un moyen de transfert et d'évacuation (32), lesdits moyens de réception et de retournement comprennant : des premiers moyens de retournement (14) positionnés au bas de ladite plaque inclinée, afin de recevoir successivement chacun des produits délivrés par cette plaque inclinée et lui faire subir une première rotation d'environ 90° autour de son axe et des seconds moyens de retournement (20) recevant successivement chacun des produits ayant subi ladite première rotation de 90° pour le faire tourner d'un angle de l'ordre de 90° complétant ainsi le retournement à 180° du produit.

2 - Dispositif selon la revendication 1, caractérisé en ce que les premiers moyens de retournement 14 sont montés fou, c'est-à-dire sans moyen de commande et ils fonctionnent sans apport d'énergie extérieure, le retournement sur 90° de chaque produit (10) s'effectuant uniquement par l'inertie de ce produit, par basculement de son centre de gravité autour de l'une de ses arêtes.

3 - Dispositif selon la revendication 2, caractérisé en ce que les premiers moyens de retournement sont réalisés sous la forme d'une pièce cruciforme (14) montée libre à pivotement sur un axe (18) perpendiculaire à l'axe du déplacement des produits le long de ladite plaque inclinée (12), cette pièce cruciforme étant positionnée de façon que ses branches (16, 16') viennent se placer successivement dans le prolongement de la surface de ladite plaque inclinée afin de recevoir le produit ayant glissé le long de cette plaque, la pièce cruciforme (14) basculant alors autour de son axe (18), sous l'effet de l'inertie du produit (10) qu'elle reçoit, faisant ainsi tourner ce dernier selon un angle d'environ 90°.

4 - Dispositif selon l'une quelconque des revendications précédentes, caractérisé en ce que les seconds moyens de retournement des produits sont réalisés sous la forme d'un support mobile (20) en forme d'équerre dont l'une des branches (22) peut être amenée dans le prolongement de la surface de la plaque inclinée (12) afin de recevoir le produit ayant subi une première rotation de 90° sous l'effet des premiers moyens de retournement (14), ce support étant articulé sur un axe (26) perpendiculaire à l'axe de déplacement du produit.

5 - Dispositif selon la revendication 4, caractérisé en ce que ledit support mobile (20) est entraîné en rotation autour de son axe (26) par l'intermédiaire d'un système de commande (30).

6 - Dispositif selon la revendication 5, caractérisé en ce que ledit système de commande est constitué d'un ou de plusieurs vérins hydrauliques ou pneumatiques.

7 - Dispositif selon l'une quelconque des revendications précédentes, caractérisé en ce que l'on prévoit un plan incliné, de longueur déterminée entre les premiers moyens (14) et les seconds moyens (20) de retournement.

8 - Dispositif selon l'une quelconque des revendications 1 à 4 et 7, caractérisé en ce que les seconds moyens de retournement fonctionnent sans moyen de commande, c'est-à-dire sans apport d'énergie extérieure.

9 - Dispositif selon la revendication 8, caractérisé en ce que les seconds moyens de retournement sont montés fou autour de leur axe de rotation de façon que la seconde rotation de 90° du produit délivré par les premiers moyens de retournement s'effectue sous l'effet de l'inertie de ce dernier, par basculement de son centre de gravité autour de l'une de ses arêtes.

FIG. 1

FIG. 2

**Office européen des brevets**

# RAPPORT DE RECHERCHE EUROPEENNE

Numéro de la demande

**EP 90 40 3109**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 083 114 (STAHL- UND RÖHRENWERK REIS-HOLZ)<br>* En entier * | 1,2,8 | C 21<br>D 9/00<br>F 27 B 9/22<br>F 27 D 3/00<br>B 65 G 47/252 |
| A | DE-B-1 056 029 (GEORG WILLY) | | |
| A | FR-E-8 142 6 (STEIN et ROUBAIX) | | |
| A | FR-A-2 449 863 (HEURTEY METALLURGIE) | | |
| A | FR-A-9 078 05 (HEURTEY) | | |
| A | FR-A-7 008 79 (VEREINIGTE STAHLWERKE) | | |
| A | EP-A-0 124 730 (HANS LINGL ANALGENBAU et al.) | | |

**DOMAINES TECHNIQUES RECHERCHES (Int. Cl.5)**

C 21 D
F 27 B
F 27 D
B 65 G

Le présent rapport de recherche a été établi pour toutes les revendications

| Lieu de la recherche | Date d'achèvement de la recherche | Examinateur |
|---|---|---|
| La Haye | 27 février 91 | MOLLET G.H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant